# EUROPEAN PATENT APPLICATION

(11) **EP 3 514 082 A1**
(43) Date of publication of application: **24.07.2019**
(21) Application number: 18152513.0
(22) Date of filing: 19.01.2018
(51) Int. Cl.: B65G 1/04

(54) **A TRANSPORTATION UNIT AND A STORAGE SYSTEM FOR SUPPLYING, STORING AND PICKING GOODS**

(71) Applicant: Logevo AB, 34324 Älmhult (SE)
(72) Inventor: Lindhé, Cecilia, 28020 Bjärnum (SE)
(74) Representative: Hansson Thyresson AB

(57) **Abstract**

A transportation unit (20b) for a storage system where the transportation unit (20b) is arranged to be movable along two parallel elongated rails (15a, 15b) of a rail arrangement of the storage system. The transportation unit (20b) comprises at least two displacement devices (25a, 25b) arranged one on each of two opposite sides (24a, 24b) of the transportation unit (20b) and configured to move along one of the elongated rails (15a, 15b). Each displacement device (25a, 25b) comprises at least two wheels separated in the direction of movement of the transportation unit (20b) and each connected to the side (24a, 24b) by means of an axle. The transportation unit further comprises a belt (35a, 35b) arranged to enclose the at least two wheels and to be in contact with the rails (15a, 15b) during operation.

## Description

### TECHNICAL FIELD

The present invention relates to a transportation unit for a storage system for supplying, storing and picking packages and goods, and to such a storage system.

### STATE OF THE ART

Goods storage systems today tend to grow larger and larger and get more and more automated with less manual handling. Often the storage system is an arrangement of storage levels and storage rows creating a complex system. The storage systems should be able to handle both the supply of goods, to the number of storage levels and storage rows, entering the storage system and the picking of the goods exiting the storage system. In order to handle the supply and picking a rail based arrangement may be used on which different types of transportation units, such as carriages, shuttles and conveyors, operates.

An issue with the cooperation between these transportation units and the rail arrangement today is to create an even and secure movement as the transportation unit moves for example from one rail to another with or without a load. Further, a disadvantage with the known transportation units is that the most common maintenance work needs to be performed on elements that are rather inaccessible which means that the work can be both difficult, expensive and time consuming.

### SUMMARY

An object of the present invention is to provide improvements over prior art. This object is achieved by a technique defined in the appended independent claims; certain embodiment being set forth in the related dependent claims.

In a first aspect of the present invention, there is provided a transportation unit for a storage system, wherein the transportation unit is arranged to be movable along two parallel elongated rails of a rail arrangement of the storage system. The transportation unit includes at least two displacement devices arranged one on each of two opposite sides of the transportation unit and configured to each move along one of the elongated rails. Further, each displacement device has at least two wheels separated in the direction of movement of the transportation unit and each connected to the side of the transportation unit be means of an axle, and a belt arranged to enclose the at least two wheels such that an inner surface of the belt is partly in contact with the at least two wheels. An outer surface of the belt is partly in contact with the elongated rail during operation.

The transportation unit as defined overcomes may of the issues explained with prior art. For example, the wheels together with the belt create an even and secure movement of the transportation unit during operation since the drive and power is distributed on all wheels by means of the belt. So, if one wheel faces an obstacle, for example a gap between two rails or an edge, the other at least one wheel can together with the belt drive the transportation unit over the obstacle without interrupting the movement. Another advantage with the defined transportation unit is that the assembly of the transportation unit is mitigated since the displacement device is located accessible on the outside of the carriage. Yet another advantage is that the maintenance work then also is mitigated, since the displacement device, which often demands the most frequent maintenance work, is more accessible in relation to corresponding displacement devices of known transportation units. Also, additional material or tools, such as lubricant which has a bad habit to drip and possible damage goods being placed below, is not likely necessary to use during maintenance work with the combination of wheels and belts.

In an embodiment the inner surface of the belt is toothed. The toothed surface creates a stronger grip with the outside of the wheels during operation.

In another embodiment an outer surface of the at least two wheels are toothed. A toothed outer surface of the wheels together with the toothed inner surface of the belt provides an even better and stronger grip between the two during operation.

Preferably, each tooth of the toothed inner surface of the belt and/or the toothed outer surface of the wheels, has a conical or frusto-conical cross section. These possible cross section shapes are advantages as the displacement device shall be able to move the transportation unit in both directions, back and forth on the rails. Further, the inner surface of the belt comprises a first rubber material and an outer surface of the belt comprises a second rubber material. Preferably the first rubber material is harder than the second rubber material. This is advantageous since the material of the inner surface of the belt primarily shall be abrasion resistant when operating with the wheels, and the material of the outer surface of the belt primarily shall create a desired friction when operating on the rails.

In a preferred embodiment each displacement device comprises at least four wheels arranged separated in the direction of movement of the transportation unit. By having at least four wheels the distribution of power during operation is even more spread out which is an advantage if the transportation unit must move over edges or gaps.

The transportation unit may further comprise a motor connected to at least one of the wheels arranged on one side of the transportation unit, via the respective axle of the displacement device. The motor is configured to drive the connected wheel such that the displacement device is able to move along the rail. An advantage with the transportation unit, with its displacement devices and their wheels and belts, as described above, is that only one motor may be necessary during operation since the wheels and belts together create a joint drive no matter to which the power source is connected

In an alternative embodiment the transportation unit may further comprise a second motor connected to at least one of the wheels arranged on the opposite side of the transportation unit, via the respective axle. The second motor is configured to drive the connected wheel such that the displacement device is able to move along respective rail. An advantage with having two motors is if one motor is interrupted or breaks down during operation which allows the transportation unit to still be operational.

In a preferred embodiment, at least one axle, connected to a wheel arranged on one side of the transportation unit, is arranged to extend and connect to a wheel on the opposite side of the transportation unit. In this way a single power source, connected to one wheel on one side of the transportation unit, is also able to provide power for wheels arranged on the opposite side of the transportation unit. This means that less power sources are necessary, and that the distribution of power can be spread out on every wheel of the transportation unit, instead of only the wheels on one side of the transportation unit, if the power source is only connected to one wheel.

In a second aspect of the invention there is provided a storage system having at least one storage level and at least one storage row for storing packages or goods. It further has at least one rail arrangement for supporting at least one transportation unit, as described above, during operation.

### BRIEF DESCRIPTION OF THE DRAWINGS

Embodiments of the invention will be described in the following, reference being made to the appended drawings which illustrate non-limiting examples of how the inventive concept can be reduced into practice.
Fig.1 is a schematic top view of a storage system with a number of aisles and transportation units according to an embodiment of the invention,
Fig. 2 is a schematic front view of the storage system in Fig. 1 seen from a picking aisle,
Fig. 3 is a perspective view of a transportation unit according to an embodiment of the invention,
Fig. 4 is a detailed perspective view of a displacement device of the transportation unit in Fig. 3,
Fig. 5 is a top view of the transportation unit in Fig. 3,
Fig. 6 is a detailed top view of the displacement device of the transportation unit in Fig. 3,
Fig. 7 is a front view of the transportation unit in Fig. 3,
Fig. 8 is a detailed front view of the displacement device of the transportation unit in Fig. 3,
Fig. 9 is a side view of the transportation unit in Fig. 3, and
Fig. 10 is a detailed front view of the displacement device of the transportation unit in Fig. 3,

### DETAILED DESCRIPTION OF EMBODIMENTS

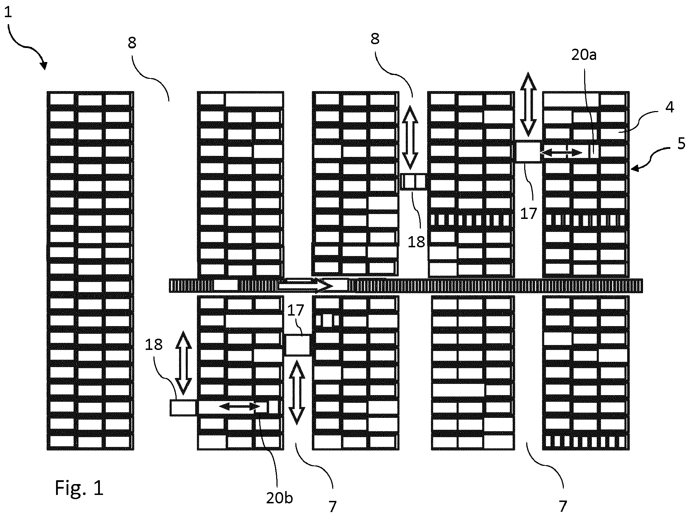

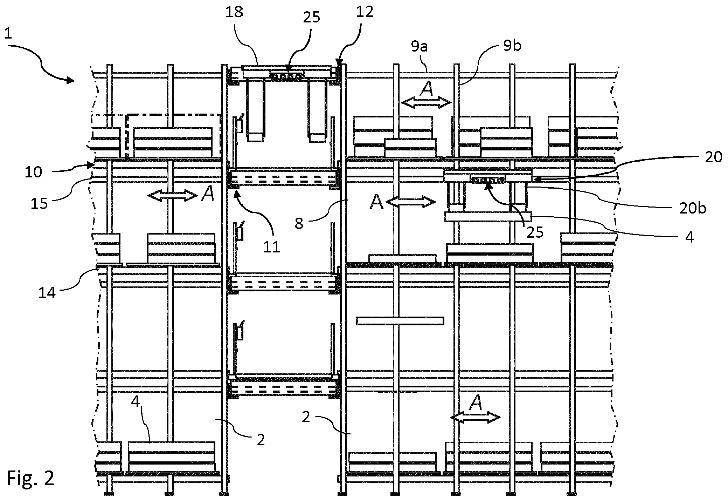

With reference to the drawings a displacement device 25 for a transportation unit 20 in a storage system 1 is described. Fig. 1 and 2 illustrate a multi-storey goods storage system 1 having a plurality of storage levels 2 in which load carriers 3, for example pallets or base boards, with packages and goods 4 are stored. Each storage level 2 has in turn a number of storage rows 5. Further, the storage system 1 preferably has supply aisles 7 and picker aisles 8 arranged parallel to each other and on each storage level 2. Preferably, the aisles 7, 8 form an arrangement with alternating supply aisles 7 and picking aisles 8. Further, the supply aisles 7 and picker aisles 8 extend perpendicular to the storage rows 5 such that it is possible to reach every storage row 5 on every storage level 2 from the supply aisles 7 or picking aisles 8.

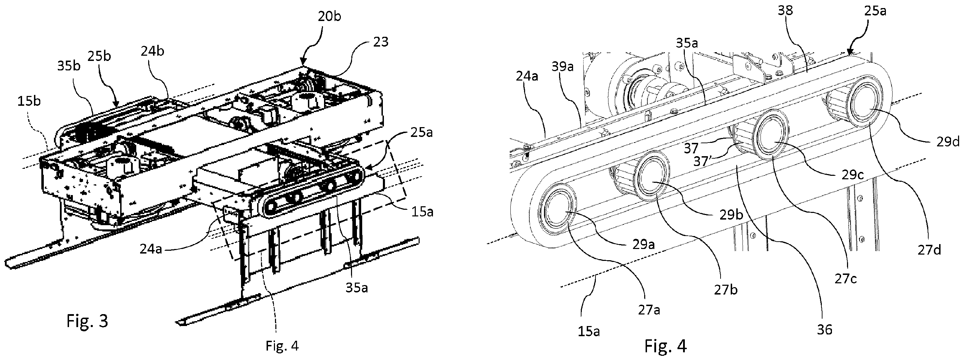

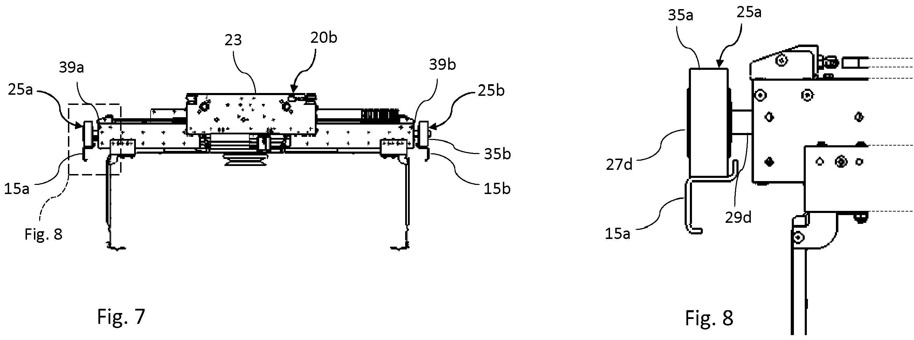

The multi-storey goods storage system 1 is basically a type of pallet racking with a plurality of vertical and horizontal load beams 9a, 9b. The load beams 9a, 9b may be designed integrated with a rail system 10 or the rail system 10 may be attached to the load beams 9a, 9b in any suitable way. The rail system 10 has both supply rail arrangements 11 which are mostly used for supplying packages and goods 4 my means of a supply transfer cart 17 and a shuttle 20a, as explained below, and picking rail arrangements 12 which are mostly used for picking packages and goods 4, also explained in more detail below. The supply aisles 7 are provided with the supply rail arrangement 11 and the picking aisles 8 are provided with the picking rail arrangement 12. From the supply rail arrangement 11 at least two spaced apart elongated base rails 14 extend into every storage row 5. Corresponding, from the picking rail arrangement 12 at least two spaced apart elongated top rails 15 extend into every storage row 5. The elongated base rails 14 and the top rails 15 can be seen as similar types of rails. The difference between them is their placement in the storage system 1. Figs. 3-10 all illustrate top rails 15, but description relating to the rails from now on can also be applied for a base rail 14.

In a supply aisle 7 a supply transfer cart 17 is operating on the supply rail arrangement 11. The supply transfer cart 17 is supporting one type of transportation unit 20, from hereon called a shuttle 20a, which is arranged to transport the load carrier 3, for example a base board or pallet, with packages and goods 4 from the supply aisle 7 out to a predetermined position in a storage row 5. Each shuttle 20a is able to move away from the supply transfer cart 17, on the base rails 14, into the selected storage row 5 carrying packages and goods 4 on the load carrier 3, and placing it at a selected position in the storage row 5. The load carrier 3 can also be picked up at a selected position by the shuttle 20a and transported back to the supply transfer cart 17. The supply transfer cart 17 can in turn transport it along the supply aisle 7 to a new selected storage level 5. The base rails 14 are basically used by the shuttle 20a for transporting the load carrier 3 with packages and goods 4 back and forth in the storage row 5, best shown by the arrow A in Fig. 2.

Corresponding, each picking aisles 8, as explained, is provided with the picking rail arrangement 12 of the rail system 10 on which a picker transfer cart 18 is operating. The top rails 15, extending into the storage rows 5, are basically used by another type of transportation device 20, from hereon called a picker 20b, see Figs 3-10. The picker 20b is supported by the picker transfer cart 18 and movable along the top rails 15 throughout the storage row 5. By moving along the top rails 15 the picker 20b is able to pick up packages or goods 4 from predetermined positions in the storage row 5 and transport it back to the picker transfer cart 18. The picker transfer cart 18 is able to move, by means of the rail system 10, to different locations in the storage system 1 in order to pick up goods 4 at different locations making it possible to customize every picking order.

The supply rail arrangement 11 and the base rails 14 are arranged on a base level of every storage level 2 on which they are present at. The picking rail arrangement 12 and the top rails 15 however, are arranged on a top level of every storage level 5 on which they are present at. This means that the two types of transportation units 20 work a bit differently, i.e. the shuttle 20a operates on the base level and the picker 20b from the top level. With the shuttle 20a several packages or goods 4 can be supplied at the same time while the picker 20b is able to select one or several package or goods 4 if desired. The picking process can then be customized for every purchase while the supplying process is streamlined with as many products as possible, if desired, at every delivery.

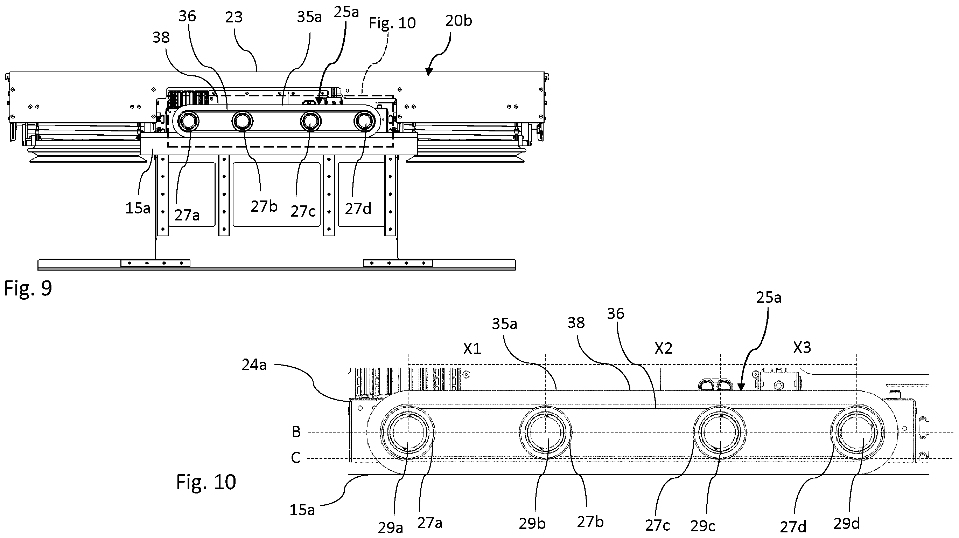

The two transportation units 20, i.e. the shuttle 20a and the picker 20b, have some basic features in common which are illustrated for a picker 20b in Figs 3-10. For example, each has a carriage 23 which is substantially rectangular with a first side 24a and a second side 24b running parallel to each other. During operation in the storage rows 5 the two sides 24a, 24b run substantially parallel to the extension of the base rails 14 and top rails 15 respectively. The first and second side 24a, 24b are spaced apart, such that the first side 24a of each transportation unit 20 is located nearby one of the at least two rails 15a and the second side 24b of each transportation unit 20 is located nearby the other of the at least two rails 15b. Each transportation unit 20 further has a first displacement device 25a arranged on the first side 24a the carriage 23 and a second displacement device 25b arranged on the second side 24b of the carriage 23. The first and second displacement devices 25a, 25b are preferably substantially similar to each other. A displacement device 25a, 25b includes, in the illustrated case, four wheels 27a-d, 28a-d, each with an axle 29a-d, 30a-d extending into respective side 24a, 24b of the carriage 23. The axles 29a-d, 30a-d and wheels 27a-d, 28a-d are freely mounted to the carriage 23 such that they are allowed to rotate back and forth. In the illustrated embodiment, see Figs 9 and 10, the four wheels 27a-d are of the same size and arranged on a straight line B, see for example Fig. 10, along the side 24a of the carriage 23. In alternative embodiments the wheels may vary in size and location, but it is preferred that the lowest point C of each wheel 27a-d is arranged in level with each other when mounted to the side of the carriage. In a mounted state, i.e. when the transportation unit 20 is placed in its operational position, the four wheels 27a-d, 28a-d on each side 24a, 24b of the carriage 23 are placed on respective rail 15a, 15b located at the nearby side 24a, 24b. Further, in alternative embodiments the number of wheels and axles may be varied to customize the displacement device of the transportation unit.

Different set-ups of the wheels are equally possible. As explained above, the wheels may be of different size, but they can also be located on similar or different distances X1-X3 from each other, see Fig. 10. In one set-up the distances between adjacent wheels may varies, i.e. each distance between adjacent wheel is different from another. In another set-up the distances between adjacent wheels are substantially constant, i.e. the same distance between every adjacent wheel. In yet another set-up, illustrated in Fig. 10, the distance X1 between a first and a second wheel 27a, 27b is equal to a distance X3 between a second last and a last wheel 27c, 27d, i.e. the distances X2 between other wheels may be different or the same.

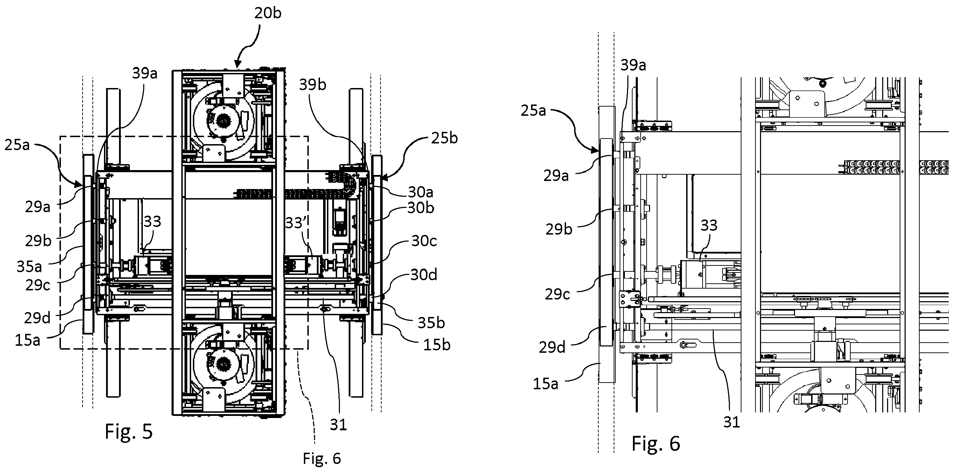

In a preferred embodiment, as illustrated in Figs 5 and 6, one axle 31 connected to a wheel 27d on the first side 24a of the carriage 23 is also connected to a wheel 28d on the opposite second side 24b of the carriage 23. This means that at least one wheel 27d on one side 24a is drivingly connected to an opposite wheel 28d on the other side 24b by means of the joint axle 31. The joint axle 31 makes it possible to have a uniform drive of the two displacement devices 20a, 20b along the rails 15 if only one drive unit 33, e.g. a motor, is connected to only one side 24a of the carriage 23.

In the illustrated embodiment, best seen in Figs 5 and 6, there is provided a motor 33, as a power source or drive unit. The motor 33 is connected to a wheel 27c on the first side 24a of the carriage 23 for driving the displacement device 20a on the first side 24a of the carriage 23 back and forth on the corresponding rail 15a. With the joint axle 31 connecting the wheels 27d, 28d on opposite sides 24a, 24b of the carriage 23 as described above, the displacement device 20b on the second side 24b of the carriage 23 is simultaneously driven along the corresponding rail 15b.

In an alternative embodiment, there are two motors 33, 33' present. The first motor 33 is connected to a wheel 27a-d on the first side 24a of the carriage 23 and the second motor 33' is connected to a wheel 28a-d on the opposite side 24b of the carriage 23. This is preferred if the transportation unit 20 and/or the load it carries is heavy or if the risk of operation failure, which happens if the one and only motor breaks down, shall be reduced. The power source or drive unit may in other embodiment be of another type, for example a battery or any other suitable means.

The displacement device 25a, 25b further includes a belt 35a, 35b. The belt 35a, 35b is arranged to tightly enclose the wheels 27a-d, 28a-d and basically operate as a fifth wheel which can transfer power from the wheel 27c connected to the motor 33 to the rest of the wheels 27a, 27b, 27d, 28a-d. The power is spread out on all wheels 27a-d, 28a-d creating a uniform movement of the displacement device 25a, 25b when transporting packages and goods 4. If, as illustrated in Figs 5 and 6, one wheel 27c on only one side 24a is connected to the motor 33 the wheels 28a-d on the other side 24b receives power via the joint axle 31. The belt 35b on the other side 24b works in the same way, spreading the power to all wheels 28a-d to create the uniform movement. An advantage with this wheel-belt-drive is, for example during an interruption in the rail or when moving over an undesired edge, that the displacement device 25a, 25b easily can pass as every wheel, with the additional help from the belts, is provided with power to move in the direction of movement A of the transportation unit 20.

The belt 35a, which is only schematically illustrated in Fig. 4, has an inner surface 36 which is in tight contact with an outer surface 37 of the wheels 27a-d. The inner surface 36 of the belt 35a and the outer surface 37 of the wheels 27a-d are preferably toothed in order to create a maximum grip during operation (the teeth of the inner surface of the belt are not shown as it is only illustrated schematically). Preferably, each tooth 37', of the toothed inner surface 36 of the belt 35a and the toothed outer surface 37 of the wheels 27a-d, has a conical or frusto-conical cross section.

Further, the inner surface 36 of the belt 35a and its teeth consists of a rubber material which is able to provide a strong grip with the teeth 37' of the wheels 27a-d. The teeth 37' and often the entire wheel 27a-d are made of metal. The rubber material of the inner surface 36 of the belt 35b has preferably features which makes it abrasion resistant during operation with the metal teeth. The rubber material may of course be replaced by another material suitable for creating high abrasion resistant and a strong grip.

The outer surface 38 of the belt 35a is the part in contact with the rail 15a, often made of metal, during operation. Preferably, the material of the outer surface 38 of the belt 35a is another type of rubber material which focuses on creating a desired friction between the belt 35a and the rail 15a. The rubber material used for the inner surface 36 and the teeth of the belt 35a is preferably different and harder than the rubber material used for the outer surface 38 due to their different applications and tasks.

The displacement device 25a, 25b further includes a mounting plate 39a, 39b, see Figs 5 and 6, arranged as a type of spacer, having as many openings (not shown) as axles 29a-d for receiving them in a mounted state of the transportation unit 20. An opening is shaped to support respective axle 29a-d without interfering with its rotation during operation.

Finally, although the inventive concept has been described above with reference to specific embodiments, it is not intended to be limited to the specific form set forth herein. Rather, the invention is limited only by the accompanying claims. Other embodiments than the specific above are equally possible within the scope of these appended claims.

## Claims

1. A transportation unit for a storage system (1), wherein said transportation unit (20; 20a; 20b) is arranged to be movable along two parallel elongated rails (14a, 14b; 15a, 15b) of a rail system (10) of said storage system (1), **characterized in that** said transportation unit (20; 20a; 20b) comprises at least two displacement devices (25a, 25b) arranged one on each of two opposite sides (24a, 24b) of said transportation unit (20; 20a; 20b) and configured to each move along one of said elongated rails (14a, 14b; 15a, 15b), wherein each displacement device (25a, 25b) comprises:
- at least two wheels (27a-d, 28a-d) separated in the direction of movement (A) of said transportation unit (20; 20a; 20b) and each connected to the side (24a, 24b) of the transportation unit (20; 20a; 20b) by means of an axle (29a-d, 30a-d), and
- a belt (35a, 35b) arranged to enclose said at least two wheels (27a-d, 28a-d) such that an inner surface (36) of said belt (35a, 35b) is partly in contact with said at least two wheels (27a-d, 28a-d) and an outer surface (38) of said belt (35a, 35b) is partly in contact with said elongated rail (14a, 14b; 15a, 15b) during operation.

2. The transportation unit according to claim 1, wherein said inner surface (36) of said belt (35a, 35b) is toothed.

3. The transportation unit according to claim 1 or 2, wherein an outer surface (37) of said at least two wheels (27a-d, 28a-d) are toothed.

4. The transportation unit according to any one of the preceding claims, wherein said displacement device (25a, 25b) being a tooth-belt-drive device.

5. The transportation unit according to any one of the claims 2-4, wherein each tooth (37') has a conical cross section.

6. The transportation unit according to any one of the claims 2-4, wherein each tooth (37') has a frusto-conical cross section.

7. The transportation unit according to any one of the preceding claims, wherein the inner surface (36) of said belt (35a, 35b) comprises a rubber material.

8. The transportation unit according to any one of the preceding claims, wherein an outer surface (38) of said belt (35a, 35b) comprises a rubber material.

9. The transportation unit according to claim 7 and 8, wherein the rubber material of the inner surface (36) is harder than the rubber material of the outer surface (38) of said belt (35a, 35b).

10. The transportation unit according to any one of the preceding claims, wherein each displacement device (25a, 25b) comprises at least four wheels (27a-d, 28a-d) arranged separated in the direction of movement (A) of said transportation unit (20; 20a; 20b).

11. The transportation unit according to any one of the preceding claims, further comprising a motor (33) connected to at least one of said wheels (27a-d) arranged on one side (24a) of said transportation unit (20; 20a; 20b), via the respective axle (29a-d), and configured to drive the connected wheel (27a-d) such that the displacement device (25a) is able to move along said rail (14a, 14b).

12. The transportation unit according to claim 11, further comprising a second motor (33') connected to at least one of said wheels (28a-d) arranged on the opposite side (24b) of said transportation unit (20; 20a; 20b), via the respective axle (30a-d), and configured to drive the connected wheel (28a-d) such that the displacement device (25b) is able to move along respective rail (15a, 15b).

13. The transportation unit according to any one of the preceding claims, wherein at least one axle (29a-d, 30a-d), connected to a wheel (27c) arranged on one side (24a) of said transportation unit (20; 20a; 20b), is arranged to extend and connect to a wheel (28c) on the opposite side (24b) of said transportation unit (20; 20a; 20b).

14. A storage system for supplying, storing and picking of packages or goods (4), comprising at least one storage level (2) and at least one storage row (5), and at least one rail system (10) for supporting at least one transportation unit (20; 20a; 20b), according to any one of the preceding claims, during operation.
